# FASCICULE DE BREVET EUROPEEN

(11) **EP 1 463 612 B1**
(45) Date de publication et mention de la délivrance du brevet: **30.03.2005**
(21) Numéro de dépôt: 02793241.7
(22) Date de dépôt: 15.11.2002
(51) Int. Cl.: B25J 9/10, B25J 9/04

(54) **MECANISME ARTICULE COMPRENANT UN REDUCTEUR A CABLE UTILISABLE DANS UN BRAS DE ROBOT**
GELENKMECHANISMUS MIT EINER SEILGETRIEBENEN UNTERSETZUNGSVORRICHTUNG FÜR EINEN ROBOTERARM
ARTICULATED MECHANISM COMPRISING A CABLE REDUCTION GEAR FOR USE IN A ROBOT ARM

(30) Priorité: 19.11.2001 FR 0114923
(43) Date de publication de la demande: 06.10.2004
(73) Titulaire: COMMISSARIAT A L'ENERGIE ATOMIQUE, 75752 Paris Cédex 15 (FR)
(72) Inventeur: GOSSELIN, Florian, F-92260 Fontenay aux Roses (FR); RIWAN, Alain, F-92240 L'Hay les Roses (FR); PONSORT, Dominique, F-91570 Bievres (FR)
(74) Mandataire: Poulin, Gérard
(86) Numéro de dépôt international: PCT/FR2002/003914
(87) Numéro de publication internationale: WO 2003/043790

(56) Documents cités:
- FR-A- 2 434 685
- US-A- 5 207 114

## Description

Le sujet de cette invention est un mécanisme articulé comprenant notamment un réducteur à câble pouvant appartenir à un bras de robot.

Les robots désignent, de manière générale, des structures déformables de manière commandée pour accomplir certains travaux , ainsi que des bras maîtres actionnés par un opérateur pour transmettre des instructions à un bras esclave reproduisant les mouvements du bras maître ou à un environnement virtuel par l'intermédiaire de transmissions mécaniques ou d'interfaces informatiques.

Plusieurs contraintes de conception pèsent sur les robots et notamment sur les bras maîtres. Il faut tout d'abord que l'opérateur d'un bras maître éprouve des sensations analogues à celles qu'il aurait en commandant directement le bras esclave, surtout quand celui-ci travaille : les efforts reçus par le bras esclave doivent donc être reproduits avec une fidélité suffisante dans le bras maître. Les liaisons entre les différentes portions du robot, essentiellement des articulations, doivent être dotées de peu de jeu et pourvues de transmissions précises, de faible inertie, présentant peu de frottement mais susceptibles d'être bloquées facilement. Enfin, il est souhaitable que les robots soient aussi légers que possible, ce qui implique non seulement de diminuer leur poids propre mais de le répartir de façon qu'il ne s'exerce que modérément sur les moyens de commande du robot utilisés pour le déplacer ou, au contraire, le maintenir à un état stable par une reprise d'effort statique.

Les moyens employés pour commander ainsi les articulations ou les autres liaisons du robot comprennent avant tout des moteurs qui sont parmi les éléments les plus pesants des robots. Il est de pratique courante de les disposer autant que possible sur des embases ou des parties basses du robot afin de réduire ou de supprimer les moments nécessaires à les soulever ou à les déplacer. Il incombe alors de prévoir une transmission convenable entre le moteur et l'organe du robot qu'il entraîne et qui assure aussi la réduction de la vitesse angulaire du moteur. Cela est facile si l'organe est directement lié à l'embase ; mais s'il est lié à l'embase par l'intermédiaire d'un autre organe, mobile sur l'embase et offrant donc un autre degré de liberté, il est beaucoup plus difficile de concevoir une transmission convenable en raison des emplacements beaucoup plus complexes que l'organe peut prendre par rapport à l'embase.

Parmi les transmissions qu'on peut proposer, il convient de citer les câbles tendus entre l'arbre du moteur et une portion de fixation appartenant à l'organe entraîné. De telles transmissions sont adoptées sur les télémanipulateurs à bras maître et bras esclave, où les câbles présentent toutefois l'inconvénient d'être longs, ce qui réduit la raideur de la transmission, et de passer par des trajectoires complexes qui entraînent des couplages entre les mouvements des différentes parties du robot. C'est également le cas pour le manipulateur décrit dans le document FR 7 825 413.

Les câbles de transmission disposés entre deux portions de robot qui ne sont pas directement reliées entre elles doivent normalement être tendus sur des poulies fixées à des organes intermédiaires. Il apparaît alors les problèmes que les distances entre leurs points de fixations sur le moteur, les organes intermédiaires et l'organe qu'ils entraînent varient en général, produisant ainsi une modification de la tension du câble par élasticité, avec l'inconvénient que la rigidité du robot est modifiée. Le dommage est plus prononcé quand le robot est un bras maître déplacé manuellement et le moteur est un moteur de retour d'effort, car l'opérateur ne peut qu'être gêné en sentant que la résistance mécanique que le bras lui oppose varie avec le déplacement.

Une transmission réductrice à câble améliorée est proposée comme élément essentiel de l'invention. Sous sa forme plus générale, elle concerne un mécanisme articulé pouvant appartenir à un bras de robot, comprenant une embase, un support tournant sur l'embase autour d'un premier axe et un organe tournant sur le support autour d'un deuxième axe non parallèle au premier axe, ainsi qu'un actionneur de l'organe pour le faire tourner, l'actionneur comprenant : un moteur fixé à l'embase ; et caractérisé en ce que l'actionneur comprend en outre un câble tendu entre un arbre du moteur, au moins une paire de poulies folles montées sur un bras de l'embase et une poulie liée à l'organe, les poulies folles étant sensiblement tangentes au premier axe ; le câble formant une paire de brins sensiblement en prolongement et colinéaires au premier axe ; les poulies folles et la poulie de l'organe étant disposées de façon que lesdits brins de la paire s'étendent entre la poulie de l'organe et,respectivement, les poulies folles.

En faisant faire au câble une paire de brins sensiblement en prolongement, et colinéaires au premier axe, on garantit que l'allongement et la tension du câble ne sont que très peu modifiés quand le support intermédiaire tourne autour du premier axe. Des conceptions perfectionnées du mécanisme permettent de diminuer encore cet allongement indésiré.

D'après certaines caractéristiques avantageuses de l'invention, l'arbre du moteur est perpendiculaire à des axes de rotation de deux des poulies folles entre lesquelles et l'arbre du moteur le câble forme deux brins rectilignes ; et une transmission linéaire existe entre l'arbre du moteur et le câble.

Dans une forme plus complexe de l'invention, il est fourni un mécanisme articulé, pouvant appartenir à un bras de robot, comprenant une embase, un support tournant sur l'embase autour d'une premier axe, caractérisé en ce qu'il comprend deux poulies de commande d'un bras par un mécanisme de liaison et deux actionneurs des poulies de commande, les actionneurs comprenant chacun : un moteur fixé à l'embase et un câble tendu entre un arbre du moteur, une paire de poulies folles montées sur un bras de l'embase et une des poulies de commande ; les poulies folles étant sensiblement tangentes au premier axe ; les poulies folles et les poulies de commande étant disposées de façon que les câbles forment des paires de brins sensiblement en prolongement et colinéaires au premier axe qui s'étendent chacun entre une des poulies de commande et une des poulies folles ; avantageusement, le mécanisme de liaison comprend un organe rigidement lié à une des poulies de commande et une bielle articulée à l'autre des poulies de commande, le bras étant articulé à la bielle et à l'organe ; les poulies de commande étant parallèles.

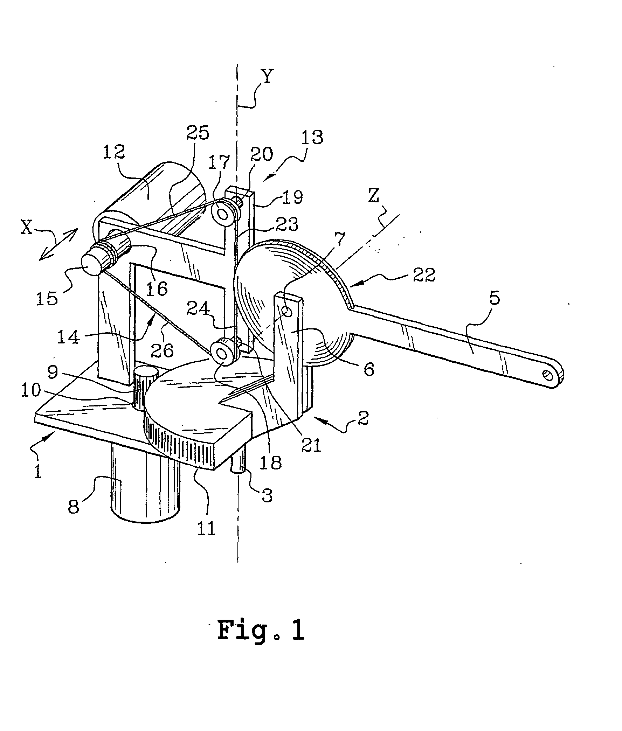

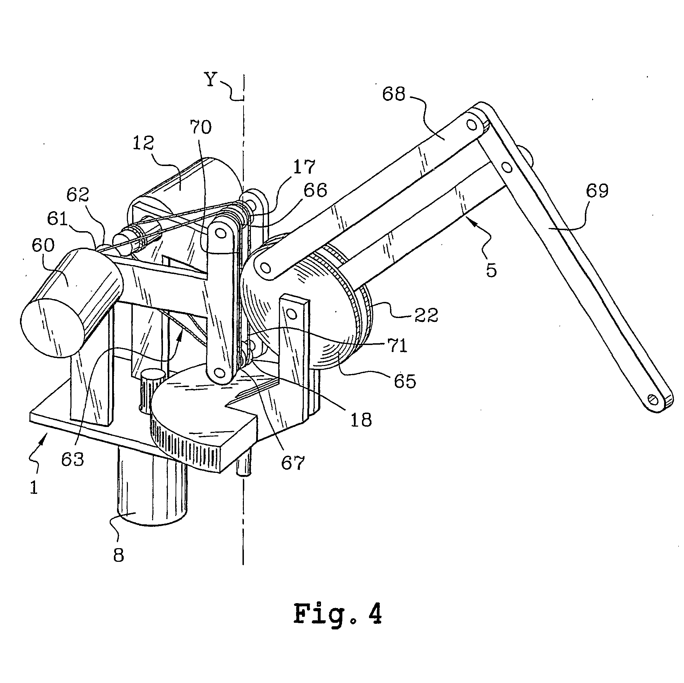

Les figures 1, 2 et 3 permettent de découvrir trois réalisations de l'invention, et la figure 4 un agencement plus complexe dans lequel l'invention est employée avec profit.

Les trois modes de réalisations préférés qu'on va successivement décrire, mais qui sont toujours plus perfectionnés, comprennent certains éléments communs qu'on découvre à la figure 1, dont une embase 1 pouvant être immobile ou non, un support 2 monté sur l'embase 1 en tournant autour d'un pivot 3 orienté selon un premier axe Y, et un organe 5 monté sur un bras 6 du support 2 par un pivot 7 tournant autour d'un deuxième axe Z. Les axes Y et Z restent ici perpendiculaires malgré les mouvements possibles du support 2 et de l'organe 5 ; dans d'autres réalisations, ils sont simplement non parallèles. Un premier moteur 8 entraîne le support 2 en rotation par l'intermédiaire d'une transmission élémentaire composée d'un pignon 9 sur l'arbre de sortie 10 du moteur 8 et d'une couronne dentée 11 engrenante taillée sur le pourtour du support 2.

Un deuxième moteur 12 entraîne l'organe 5 ; comme le premier moteur 8, il est fixé à l'embase 1 et ne peut donc entraîner l'organe 5 que par une transmission plus compliquée ; alors que la transmission précédente pouvait comprendre, au lieu d'un engrenage, une courroie, un câble, etc. il est préconisé que la transmission 13 composite entre le deuxième moteur 12 et l'organe 5 comprenne avant tout un câble 14 tendu entre une poulie motrice 15 disposée sur l'arbre 16 de sortie du moteur 12, une paire de poulies folles 17 et 18 montées sur un bras 19 de l'embase 1 par des pivots 20 et 21 respectifs, et une poulie entraînée 22 dépendant de l'organe 5, et rigidement fixée à lui. Le câble 14 est enroulé autour de la poulie entraînée 22 en faisant une portion de tour suffisante pour obtenir le débattement désiré, et autour de la poulie motrice 15 en faisant plusieurs tours pour qu'un frottement suffisant retienne le câble 14 de glisser. Les pivots 20 et 21 des poulies folles 17 et 18 sont perpendiculaires au premier axe Y et s'étendent à peu de distance de lui, de sorte que le câble 14 tendu entre la poulie entraînée 22 et chacune des poulies folles 17 et 18 forme une paire de brins 23 et 24 sensiblement en prolongement et confondus avec le premier axe Y.

La rotation du support 2 autour du premier axe Y ne modifie que très peu la position des brins 23 et 24 et n'a donc guère d'influence sur la tension du câble 14, ce qui est le résultat qu'on recherchait. On notera que le câble 14 sera généralement enroulé en plusieurs spires autour de la poulie motrice 15 pour lui permettre d'entraîner le câble par un frottement suffisant, et que les brins correspondants du câble 14 menant respectivement aux poulies folles 17 et 18 et notés 25 et 26 ne seront donc pas coplanaires. Les poulies 17 et 18 seront avantageusement placées dans des plans formés respectivement par les brins 23 et 25 ou 14 et 24 en milieu de course du moteur.

Cependant les axes des pivots 20 et 21 ne sont alors pas parallèles, Ce qui peut être désavantageux.

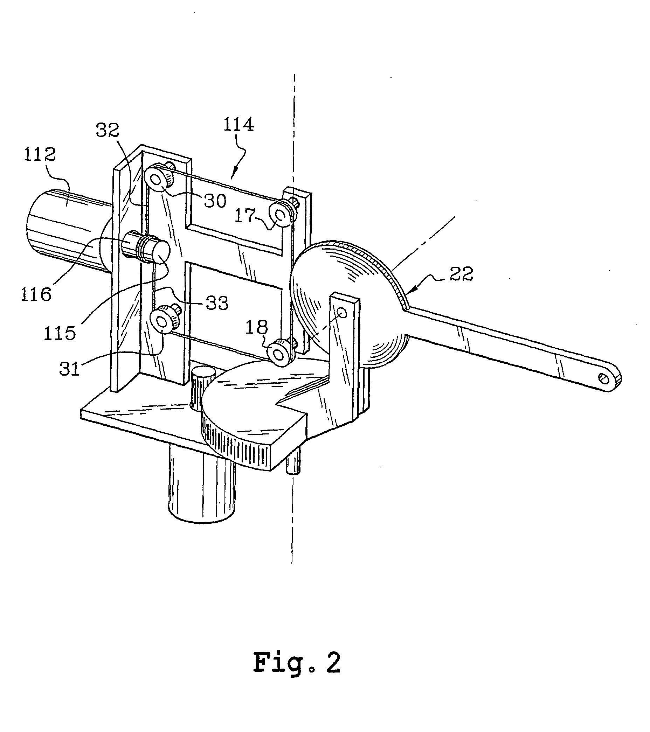

La réalisation de la figure 2 diffère de la précédente par la position du deuxième moteur ainsi que par la forme du câble qui ne procure pas l'inconvénient indiqué ci-dessus ; les éléments correspondant à ceux de la première réalisation mais pour lesquels la description devra être amendée ou complétée porteront un numéro de référence augmenté de 100.

Le câble 114 est maintenant tendu entre deux poulies folles supplémentaires 30 et 31 disposées entre l'arbre 116 du moteur 112 et, respectivement, les poulies folles 17 et 18 précédentes. Il forme un rectangle entre la poulie motrice 115 et la poulie entraînée 22.

Cette disposition prend son sens si le moteur 112 est orienté de manière que son arbre 116 soit perpendiculaire au deuxième axe Z, lorsque celui-ci est placé dans la configuration de la figure 2, comme au premier axe Y et que sa poulie 115 soit sensiblement tangente au plan passant par les poulies folles supplémentaires 30 et 31 : les brins 32 et 33 du câble 114 menant des poulies folles supplémentaires 30 et 31 à la poulie entraînée 115 sont alors sensiblement coplanaires, de même d'ailleurs que le reste du câble 114, qui est tendu en restant droit dans les gorges des poulies folles 17, 18, 31 et 32.

Si on veut bien revenir à la figure 1, on s'apercevra que la rotation de l'arbre moteur 16 produit un déroulement des spires d'un côté de la poulie 115 et un enroulement de spires supplémentaires de l'autre côté, c'est-à-dire un déplacement de l'empilement des spires dans la direction X ou le long de l'arbre moteur 16. Il est de nature à faire varier la tension du câble 114 et empêcher ainsi de parvenir parfaitement à l'objectif qu'on s'était fixé. Cet allongement résiduel du câble 114 existe toujours dans la réalisation de la figure 2, mais comme il s'effectue sans déplacer sensiblement le câble 114 du plan dans lequel il s'étend, une meilleure stabilité de fonctionnement du mécanisme est tout de même obtenue.

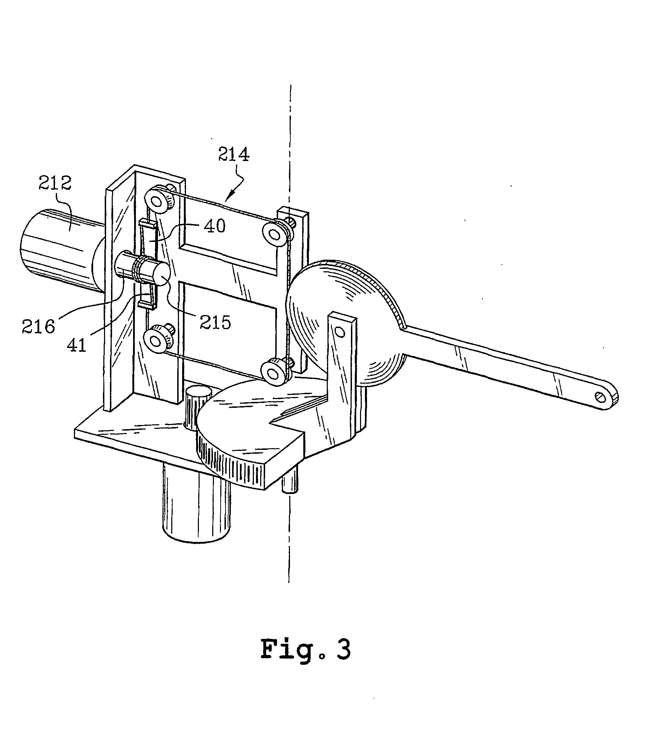

On obvie parfaitement à cet allongement résiduel du câble en adoptant l'agencement de la figure 3, qui se distingue du précédent en ce que le câble (ici 214) n'est pas enroulé sur une poulie motrice mais est fixé à une transmission linéaire telle qu'une crémaillère 40 associée à un câble supplémentaire 41 enroulé autour d'une poulie 215 de l'arbre moteur 216. Dans un tel système, la rotation de l'arbre moteur 216 déplace la crémaillère 40 linéairement (verticalement) et fait coulisser le câble 214 sur lui-même sans aucunement changer sa forme ; les déformations consécutives au déplacement de l'empilement des spires sont supportées par le câble supplémentaire 41. Dans cette réalisation encore moins que dans les précédentes la tension du câble 214 ne dépend pas des mouvements du support 2 ni de l'organe 5.

Il est à noter que d'autre poulies folles peuvent être ajoutées si le moteur d'entraînement 12, 112 ou 212 doit être placé plus loin de l'organe dans une autre position. De même, les poulies folles supplémentaires pourraient être en nombre impair. De la même façon, des poulies folles peuvent être disposées sur le corps 2 pour placer l'axe Z de rotation du corps 5 dans une autre position ou orientation.

L'invention a jusqu'à présent été décrite pour un bras maître avec des moteurs de retour d'efforts. Elle pourrait aussi s'appliquer à des robots au déplacement commandé par ces mêmes moteurs.

Un agencement d'articulation de bras de robot incluant le mécanisme précédent pourra être décrit au moyen de la figure 4.

Il s'agit en fait d'un développement de la réalisation de la figure 1, où en sus de l'organe 5, du deuxième moteur 12, etc. on trouve un mécanisme analogue qui comprend un troisième moteur 60, un arbre de sortie 61 à poulie motrice 62, une paire de poulies folles 66 et 67 et une poulie entraînée 65 et parallèle à la poulie entraînée précédente 22 en tournant autour du second axe Z. Un câble 63 est tendu entre la poulie motrice 62 et la poulie entraînée 65 en passant par les poulies folles 66 et 67, qui sont respectivement adjacentes aux poulies folles 17 et 18 de l'autre mécanisme : les brins 70 et 71 du câble 63 reliant les poulies folles 66 et 67 à la poulie 65 sont eux aussi sensiblement confondus avec le deuxième axe Y. Les câbles 14 et 63 sont situés dans des plans faisant un angle aigu entre eux de manière à éloigner un peu les moteurs 12 et 60 l'un de l'autre tout en les maintenant montés chacun sur l'embase 1.

A la poulie entraînée 65 peut être articulée une bielle 68. Ce mécanisme de type parallélogramme pourrait également être réalisé à l'aide de câbles ; pour cela un ou plusieurs brins de câbles sont fixés sur des poulies liées aux corps 65 et 69 et dont les axes passent respectivemesnt par l'axe (Z) et par l'axe de liaison des corps 5 et 69, réalisant ainsi la transmission du mouvement de la poulie de commande 65 au corps 69. On voit que les déplacements du bras 69 dans un plan vertical peuvent être commandés par des mouvements conjoints des moteurs 12 et 60, qui font tourner indépendamment les deux poulies entraînées 22 et 65, et que le moteur 8 permet de modifier la position du plan de pivotement du bras 69. Les deux systèmes de transmission commandés par les moteurs 12 et 60 bénéficient tous deux presque pleinement des avantages de l'invention en raison de la proximité des brins des câbles 14 et 63 qui sont adjacents aux poulies entraînées 22 et 65 et de l'axe Y. On notera que l'extrémité du bras 69 peut prendre toutes les positions dans l'espace, alors que les trois moteurs qui commandent cette position sont tous fixés à l'embase 1 en formant un ensemble compact. Le robot ainsi formé sera peu encombrant, le bras 69 étant nu et les moteurs étant rassemblés à une portion d'embase immobile (ou moins mobile) du robot ; et l'organe 5, la bielle 68 et le bras 69 n'auront pas à résister aux efforts produits par le poids de moteur et pourront être construits avec plus de légèreté. Pour obtenir un robot à six degrés de liberté on peut, par exemple, adjoindre un poignet au robot sur la figure 4.

## Revendications

1. Mécanisme articulé, pouvant appartenir à un bras de robot, comprenant une embase (1), un support (2) tournant sur l'embase autour d'un premier axe (Y) et un organe (5) tournant sur le support (2) autour d'un deuxième axe (Z) non parallèle au premier axe, ainsi qu'un actionneur de l'organe pour le faire tourner, l'actionneur comprenant : un moteur (12) fixé à l'embase ; et **caractérisé en ce que** l'actionneur comprend en outre un câble (14) tendu entre un arbre (16) du moteur, une paire de poulies folles (17,18) montées sur un bras (19) de l'embase et une poulie (22) liée à l'organe, les poulies folles (17, 18) étant sensiblement tangentes au premier axe ; les poulies folles (17, 18) et la poulie de l'organe étant disposées de façon que le câble forme entre la poulie de l'organe et, respectivement, les poulies folles, une paire de brins (23, 24) sensiblement en prolongement et colinéaires au premier axe.

2. Mécanisme articulé suivant la revendication 1, **caractérisé en ce qu'**il comprend d'autres poulies folles (30, 31), le câble étant tendu entre l'arbre du moteur et la poulie de l'organe en formant deux branches passant par deux groupes complémentaires des poulies folles.

3. Mécanisme articulé suivant l'une quelconque des revendications 1 ou 2, **caractérisé en ce que** l'arbre du moteur (116, 216) est perpendiculaire à deux des poulies folles entre lesquelles et l'arbre du moteur le câble forme deux brins rectilignes.

4. Mécanisme articulé suivant l'une quelconque des revendications 1 à 3, **caractérisé en ce qu'**il comprend une transmission (40) à déplacement linéaire entre l'arbre du moteur et le câble.

5. Mécanisme articulé, pouvant appartenir à un bras de robot, comprenant une embase (1), un support (2) tournant sur l'embase autour d'un premier axe (Y), **caractérisé en ce qu'**il comprend deux poulies de commande (22, 65) d'un bras (69) par un mécanisme de liaison (5, 68) et deux actionneurs des poulies de commande, les actionneurs comprenant chacun : un moteur (12, 60) fixé à l'embase et un câble (14, 63) tendu entre un arbre du moteur (16, 61), une paire de poulies folles (17, 18, 66, 67) montées sur un bras (19) de l'embase et une des poulies de commande (22, 65) ; les poulies folles étant sensiblement tangentes au premier axe ; les poulies folles et les poulies de commande étant disposées de façon que les câbles forment des paires de brins (23, 24 ; 70, 71) sensiblement en prolongement et colinéaires au premier axe (Y) qui s'étendent chacun entre une des poulies de commande (22, 65) et une des poulies folles (17, 18 ; 66, 67).

6. Mécanisme articulé suivant la revendication 5, **caractérisé en ce que** les câbles (14, 63) s'étendent sensiblement dans des plans formant un angle aigu entre eux.

7. Mécanisme articulé suivant l'une quelconque des revendications 5 ou 6, **caractérisé en ce que** le mécanisme de liaison comprend un organe (5) rigidement lié à une des poulies de commande (22) et une bielle (68) articulée à l'autre des poulies de commande (65) ; le bras (69) étant articulé à la bielle et à l'organe ; les poulies de commande étant parallèles et tournant autour d'un deuxième axe (Z) non parallèle au premier axe (Y).

8. Mécanisme articulé suivant la revendication 7 **caractérisé en ce que** la bielle 68 est remplacée par un ou plusieurs brins de câbles fixés sur des poulies liées aux corps (5 et 69) et dont les axes passent respectivement par l'axe (Z) et par l'axe de liaison des corps (5 et 69), et réalisant la transmission du mouvement de la poulie de commande (65) au corps (69).

9. Mécanisme articulé suivant l'une quelconque des revendications 1 à 8, **caractérisé en ce que** le premier axe (Y) et le deuxième axe (Z) sont orthogonaux.

## Patentansprüche

1. Gelenkmechanismus, der zu einem Roboterarm gehören kann und der eine Grundplatte (1), einen auf der Grundplatte um eine erste Achse (Y) drehbaren Träger (2) und ein auf dem Träger (2) um eine zur ersten Achse nicht-parallele zweite Achse (Z) schwenkbares Organ bzw. Bauteil (5) sowie eine Betätigungseinrichtung dieses Bauteils umfasst, um es zu drehen, wobei diese Betätigungseinrichtung einen an der Grundplatte befestigten Motor (12) umfasst,
**dadurch gekennzeichnet, dass** die Betätigungseinrichtung außerdem ein Seil (14) umfasst, gespannt zwischen einer Welle (16) des Motors, einem an einen Grundplattenschenkel (19) montierten Paar loser Rollen (17, 18) und einer mit dem Organ verbundenen Rolle (22), wobei die losen Rollen (17, 18) im Wesentlichen die erste Achse tangieren und diese losen Rollen (17, 18) und die Organ-Rolle so angeordnet sind, dass das Seil zwischen jeweils der Organ-Rolle und jeder der losen Rollen ein Paar Stränge (23, 24) bildet, die im Wesentlichen sich gegenseitig verlängern und kolinear sind zur ersten Achse.

2. Gelenkmechanismus nach Anspruch 1, **dadurch gekennzeichnet, dass** er weitere lose Rollen (30, 31) umfasst, wobei das Seil zwischen der Motorwelle und der Organ-Rolle gespannt ist und dabei zwei Zweige bildet, die über zwei zusätzliche Gruppen loser Rollen laufen.

3. Gelenkmechanismus nach einem der Ansprüche 1 oder 2, **dadurch gekennzeichnet, dass** die Welle des Motors (116, 216) senkrecht ist zu zweien der losen Rollen, zwischen denen und der Motorwelle das Seil zwei geradlinige Stränge bildet.

4. Gelenkmechanismus nach einem der Ansprüche 1 bis 3, **dadurch gekennzeichnet, dass** er eine Linearbewegungsübertragungseinrichtung (40) zwischen der Motorwelle und dem Seil umfasst

5. Gelenkmechanismus, der zu einem Roboterarm gehören kann und der eine Grundplatte (1) und einen auf der Grundplatte um eine erste Achse (Y) drehbaren Träger (2) umfasst, **dadurch gekennzeichnet, dass** er zwei Steuerrollen (22, 65) eines armartigen Bauteils (69) mittels eines Verbindungsmechanismus (5, 68) sowie zwei Betätigungseinrichtungen der Steuerrollen aufweist, wobei jede der Betätigungseinrichtungen umfasst: einen auf der Grundplatte befestigten Motor (12, 60) und ein Seil (14, 63), gespannt zwischen einer Motorwelle (16, 61), einem an einen Grundplattenschenkel (19) montierten Paar loser Rollen (17, 18, 66, 67) und einer der Steuerrollen (22, 65), wobei die losen Rollen im Wesentlichen die erste Achse tangieren und diese losen Rollen und die Steuerrollen so angeordnet sind, dass die Seile Paare von Strängen (23, 24 ; 70, 71) bilden, die im Wesentlichen sich gegenseitig verlängern und kolinear sind zur ersten Achse (Y) und von denen sich jeder zwischen einer der Steuerrollen (22, 65) und einer der losen Rollen (17, 18 ; 66, 67) erstreckt.

6. Gelenkmechanismus nach Anspruch 5, **dadurch gekennzeichnet, dass** die Seile (14, 63) sich im Wesentlichen in Ebenen erstrecken, die miteinander einen spitzen Winkel bilden.

7. Gelenkmechanismus nach einem der Ansprüche 5 oder 6, **dadurch gekennzeichnet, dass** der Verbindungsmechanismus ein mit einer der Steuerrollen (22) starr verbundenes organartiges Bauteil (5) und eine an der anderen Steuerrolle (65) angelenkte Kurbelstange (68) umfasst, wobei das armartige Bauteil (69) an der Kurbelstange und an dem organartigen Bauteil angelenkt ist, die Steuerrollen parallel sind und sich um eine zur ersten Achse (Y) nicht-parallele zweite Achse (Z) drehen.

8. Gelenkmechanismus nach Anspruch 7, **dadurch gekennzeichnet, dass** die Kurbelstange (68) durch einen oder mehrere Stränge von Seilen ersetzt wird, die an Rollen befestigt sind, die mit den Bauteilen (5 und 69) verbundenen sind und deren Achsen jeweils in der Achse (Z) und in der Verbindungsachse der Bauteile (5 und 69) verlaufen, und die die Übertragung der Bewegung der Steuerrolle (65) zum Bauteil (69) realisieren.

9. Gelenkmechanismus nach einem der Ansprüche 1 bis 8, **dadurch gekennzeichnet, dass** die erste Achse (Y) und die zweite Achse (Z) rechtwinklig sind.

## Claims

1. Articulated mechanism which may belong to a robot arm, comprising a base (1), a support (2) rotating on the base around a first axis (Y) and a unit (5) rotating on the support (2) around a second axis (Z) not parallel to the first axis, as well as an actuator of the unit for rotating it, the actuator comprising a motor (12) secured to the base; and **characterized in that** the actuator further comprises a tensioned cable (14) between a shaft (16) of the motor, a pair of idle pulleys (17, 18) mounted on an arm (19) of the base and a pulley (22) attached to the unit, the idle pulleys (17, 18) being substantially tangent to the first axis; the idle pulleys (17, 18) and the pulley of the unit (22) being positioned so that the cable forms a pair of strands (23, 24) substantially in extension and colinear with the first axis, between the pulley of the unit and the idle pulleys, respectively.

2. Articulated mechanism according to claim 1, **characterized in that** it comprises other idle pulleys (30, 31), the cable being tensioned between the shaft of the motor and the pulley of the unit and forming two branches passing through two complementary groups of idle pulleys.

3. Articulated mechanism according to any of claims 1 or 2, **characterized in that** the shaft of the motor (116, 216) is perpendicular to two of the idle pulleys between which and the shaft of the motor, the cable forms two rectilinear strands.

4. Articulated mechanism according to any of claims 1 to 3, **characterized in that** it comprises a transmission (40) with a linear displacement between the shaft of the motor and the cable.

5. Articulated mechanism which may belong to a robot arm, comprising a base (1), a support (2) rotating on a base around a first axis (Y), **characterized in that** it comprises two pulleys (22, 65) for controlling an arm (69) through a linkage mechanism (5, 68) and two actuators of control pulleys, the actuators each comprising: a motor (12, 60) secured to the base and a tensioned cable (14, 63) between a shaft of the motor (16, 61), a pair of idle pulleys (17, 18, 66, 67) mounted on an arm (19) of the base and one of the control pulleys (22, 65); the idle pulleys being substantially tangent to the first axis; the idle pulleys and the control pulleys being positioned so that the cables form pairs of strands (23, 24; 70, 71) substantially in extension and colinear with the first axis (Y), each of them extending between one of the control pulleys (22, 65) and one of the idle pulleys (17, 18; 66, 67).

6. Articulated mechanism according to claim 5, **characterized in that** the cables (14, 63) substantially extend in planes and form an acute angle between them.

7. Articulated mechanism according to any of claims 5 or 6, **characterized in that** the linkage mechanism comprises a unit (5) stiffly attached to one of the control pulleys (22) and a connecting rod (68) articulated with the other one of the control pulleys (65); the arm (69) being articulated with the connecting rod and the unit; the control pulleys being parallel and rotating around a second axis (Z) not parallel with the first axis (Y).

8. Articulated mechanism according to claim 7, **characterized in that** the connecting rod (68) is replaced by one or several strands of cables fixed on the pulleys attached to the bodies (5 and 69) and the axes of which pass through the (Z) axis and through the axis linking the bodies (5 and 69), respectively, and achieving transmission of the movement of the control pulley (65) to the body (69).

9. Articulated mechanism according to any of claims 1 to 8, **characterized in that** the first axis (Y) and the second axis (Z) are orthogonal.
